# EUROPEAN PATENT APPLICATION

(11) **EP 2 684 693 A1**
(43) Date of publication of application: **15.01.2014**
(21) Application number: 11860772.0
(22) Date of filing: 11.03.2011
(51) Int. Cl.: B32B 27/30, B32B 27/06, B32B 37/00, G02B 5/30, C08J 7/04

(54) **METHOD FOR MANUFACTURING COMPOSITE FILM ON WHICH OPTICAL FILM IS LAMINATED**

(71) Applicant: Hong, Soon Young, Gyeonggi-do 445-944 (KR); Insandigichem Co. Ltd., Kyunggi Do 445-944 (KR)
(72) Inventor: HONG, Soon Young, Gyeonggi-do 445-944 (KR)
(74) Representative: Grünecker, Kinkeldey, Stockmair & Schwanhäusser
(86) International application number: PCT/KR2011/001711
(87) International publication number: WO 2012/124833

(57) **Abstract**

A method of manufacturing a composite film on which an optical film is stacked is provided. More particularly, a method of manufacturing one composite film by stacking and coupling a lower diffusion film, a prism sheet and an upper diffusion film, which constitute a backlight unit, is provided. The method of manufacturing a composite film on which an optical film is stacked can be useful in reducing the consumption of cost and time required to stack respective optical films which constitute a backlight unit and preventing attachment of foreign substances caused by static electricity or generation of surface defects such as scratches, thereby increasing a production yield.

## Description

### BACKGROUND

### 1. Field of the Invention

The present invention relates to a method of manufacturing a composite film on which an optical film is stacked, and more particularly, to a method of manufacturing one composite film by stacking and coupling a lower diffusion film, a prism sheet and an upper diffusion film, which constitute a backlight unit.

### 2. Discussion of Related Art

In general, optical films include optical films which provide functionalities to a film itself so as to exert certain functions or provide functionality when a functional stacked film is stacked and coated on a film or film support.

Such optical films include a diffusion film and a prism sheet which are used for a backlight unit (BLU) of a liquid crystal display device (LCD).

The LCD is one of flat-panel display devices which display an image using the electro-optical characteristics of liquid crystals having an intermediate property between a liquid and a solid. Thus, the LCD has advantages in that it is thinner and lighter than other display devices, and is driven at a low driving voltage and power consumption, and has been widely used in various industries.

The LCD is a non-emissive element that does not allow a liquid crystal display panel to independently emit light so as to display an image, and thus requires a separate backlight unit to supply light.

Light emitted from a cold cathode fluorescent lamp (CCFL) reaches a display screen through a backlight unit. Here, the backlight unit includes a diffusion film configured to uniformly illuminate the entire surface of the LCD with light, and a prism sheet configured to collect the light emitted from the diffusion film and transmit the light to the LCD.

The diffusion film should function to diffuse light generated from a light source not to show an image of the light source and maintain the brightness of the entire screen without causing damage to the brightness of the light source.

The diffusion film functions to disperse light, which is emitted from a light guide plate and incident on a display screen, so as to make the brightness distribution of light uniform. Here, the diffusion film includes a transparent film configured to disperse a transparent filler over a surface of a transparent polyester film, a specular reflection film configured to stack thin films, and a milk-white diffuse reflection film configured to diffusely reflect white light like a sheet of paper.

In the prior art, a transparent base film such as glass, an acrylic resin, polycarbonate or polyester, whose surface is processed into a prism shape, or a transparent film containing inorganic fine particles or transparent resin particles has been used as the diffusion film. Also, the diffusion film may be manufactured by coating a surface of the transparent film with a resin containing the particles.

Meanwhile, the prism sheet is used to improve the brightness of a backlight unit disposed at the rear surface of an LCD. Here, the prism sheet is a film which is generally disposed over a diffusion plate or a diffusion film so as to enhance the front brightness of the backlight unit and functions to emit light from a light source, which light is uniformly diffused and emitted in various directions, to the front side using the functions (such as total reflection and refraction) of a prism structure, thereby improving the brightness.

In general, the prism sheet has prisms repeatedly formed thereon and having a triangular section formed on a surface thereof, and functions to collect and emit light diffused by the diffusion film in a vertical direction with respect to the display screen.

In the prior art, optical films configured as each of the diffusion film and the prism sheet are stacked in a predetermined order to form a backlight unit, and transmit light emitted from a CCFL onto a display screen through the backlight unit. Here, the consumption of cost and time required to stack the backlight unit and the reduction in production yield remain to be solved.

That is, a double-side release liner configured to protect optical films should first be removed so as to combine respective optical films to form a backlight unit. In this case, time may be consumed in removing the release liner, and films may be damaged during removal of the release liner.

Further, as the total thickness of the LCD gets thinner, each optical film is smaller in thickness. As a result, optical films may be increasingly damaged in a process of stacking the optical films due to weak strengths of the optical films. Also, since the optical films require precise optical functionalities, the surface defects such as scratches or attachment of foreign substances may have detrimental effects on the overall performances of the LCD.

Also, lint or other foreign substances may be attached to a surface of a film due to the static electricity generated during the coupling process, and thus the consumption of cost and time may be increased, a production yield may be lowered, and the manufacturing costs may be increased.

Recently, there have been attempts to solve the above-identified problems regarding a method of stacking optical films used for the backlight unit of the LCD. As one of these attempts, the present invention is designed to provide a method of manufacturing a composite film in which a diffusion film and a prism sheet are formed integrally with each other.

### SUMMARY OF THE INVENTION

The present invention is designed to solve the problems of the prior art, and therefore it is an object of the present invention to provide a method of manufacturing one composite film using optical films, each of which constitutes a backlight unit used in a liquid crystal display device (LCD), so as to prevent the consumption of cost and time required to stack the backlight unit and the reduction in production yield.

One aspect of the present invention provides a method of manufacturing a composite film on which an optical film is stacked. Here, the method includes preparing a resin composition including an acrylate oligomer at 80 to 90% by weight, a low-viscosity acrylate monomer at 3 to 11% by weight and a photopolymerization initiator at 3 to 7% by weight, applying the resin composition onto a leading end of a pattern formed on a surface of a prism sheet and pressing the leading end on the rear surface of a diffusion film or the prism sheet, and curing the pressed resin composition with UV rays and heat.

In this case, the applying and pressing of the resin composition on the pattern leading end may include applying a resin composition contained in a storage container 11 to an outer circumferential surface of first adhesive roll 12, which rotates over the storage container 11, while coming in contact with the first adhesive roll 12, adjusting a coating thickness of the resin composition by means of a first adjustment plate 13 and applying the resin composition to an outer circumferential surface of a rotating second adhesive roll 14 while coming in contact with the resin composition applied to the outer circumferential surface of the first adhesive roll 12; adjusting a coating thickness of the resin composition applied to the outer circumferential surface of the second adhesive roll 14 by means of a second adjustment plate 15 and applying the resin composition to an outer circumferential surface of a rotating third adhesive roll 16 while coming in contact with the resin composition applied to the outer circumferential surface of the second adhesive roll 14; introducing a prism sheet 10 manufactured using a pattern roller and a UV lamp 19 into an outer circumferential surface of the third adhesive roll 16 to which the resin composition is applied; contacting the pattern leading end formed on the surface of the prism sheet 10 with the resin composition on the outer circumferential surface of the third adhesive roll 16 and attaching the resin composition to the pattern leading end by means of a pressing process using a drum roll 17 which comes in contact with the rear surface of the prism sheet 10; contacting the pattern leading end to which the resin composition is attached with a pattern-forming surface of another prism sheet 30 manufactured using a pattern roller 20 and a UV lamp 21; and pressing and curing the resin composition attached to the pattern leading end using a first laminating roll 22 and a second laminating roll 23, which are arranged in positions opposite to each other with respect to the prism sheet.

Further, the resin composition applied to the pattern leading end may have a thickness of 3 to 6 µm.

### BRIEF DESCRIPTION OF THE DRAWINGS

The above and other objects, features and advantages of the present invention will become more apparent to those of ordinary skill in the art by describing in detail exemplary embodiments thereof with reference to the attached drawings, in which:
FIG. 1 is a schematic view showing a composite film on which an optical film is stacked according to one exemplary embodiment of the present invention.
FIG. 2 is a diagram showing the manufacture of an optical film according to one exemplary embodiment of the present invention.
FIG. 3 is a diagram showing the manufacture of an optical film according to another exemplary embodiment of the present invention.

### DETAILED DESCRIPTION OF EXEMPLARY EMBODIMENTS

Hereinafter, exemplary embodiments of the present invention will be described in detail. However, the present invention is not limited to the embodiments disclosed below, but can be implemented in various forms. The following embodiments are described in order to enable those of ordinary skill in the art to embody and practice the present invention.

Although the terms first, second, etc. may be used to describe various elements, these elements are not limited by these terms. These terms are only used to distinguish one element from another. For example, a first element could be termed a second element, and, similarly, a second element could be termed a first element, without departing from the scope of exemplary embodiments. The term "and/or" includes any and all combinations of one or more of the associated listed items.

It will be understood that when an element is referred to as being "connected" or "coupled'' to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of exemplary embodiments. The singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, components and/or groups thereof, but do not preclude the presence or addition of one or more other features, integers, steps, operations, elements, components and/or groups thereof.

With reference to the appended drawings, exemplary embodiments of the present invention will be described in detail below. To aid in understanding the present invention, like numbers refer to like elements throughout the description of the figures, and the description of the same elements will be not reiterated.

The method of manufacturing a composite film on which an optical film is stacked according to the present invention may be first achieved by preparing a UV-curable and thermosetting resin composition which has an adhesive property without causing the distortion of light when light emitted from a cold cathode fluorescent lamp (CCFL) reaches a display screen through a backlight unit, applying the resin composition to a leading end of a pattern (hereinafter referred to as a "pattern leading end") formed on a surface of a prism sheet, which is an optical film constituting the composite film, and stacking the leading end on the rear surface of a diffusion film or the prism sheet using pressing and curing processes.

The resin composition includes a (meth)acrylate oligomer, a low-viscosity acrylate monomer and a photopolymerization initiator.

In general, the oligomer is referred to as a "free polymer" and is included as a main component of the resin composition according to the present invention. In this case, a photoreactive functional group is introduced into the oligomer so that the oligomer can show a photopolymerization property. Here, an acrylate-based photocurable free polymer, which is obtained through introduction of a (meth)acrylate group that is a functional group having a double bond, is most preferably used as the photopolymerizable oligomer.

An acrylate resin is often referred to as an acrylic resin, and is a material that has advantages in that it is highly transparent to an extent that approximately 85% of light is able to be transmitted, may show properties such as weather resistance and color combination, has a predetermined rigidity, and may be widely used for coloring and applied to readily manufacture various kinds of molded products.

The (meth)acrylate oligomer that may be used herein includes polyester (meth)acrylate, polyether (meth)acrylate, epoxy (meth)acrylate, urethane (meth)acrylate, spiran resin (meth)acrylate and silicone resin (meth)acrylate. Here, the (meth)acrylate is generally referred to as an acrylate or methacrylate.

As widely used in the art to which the present invention belongs, the oligomer of the present invention refers to a polymer having a number average molecular weight of less than 10,000, preferably less than 5,000.

The monofunctional acrylate containing a photoreactive functional group may include hydroxyethyl (meth)acrylate, hydroxypropyl (meth)acrylate, hydroxybutyl (meth)acrylate, hydroxypentyl (meth)acrylate, hydroxyhexyl (meth)acrylate, phenoxyethyl (meth)acrylate, and o-phenylphenoxyethyl (meth)acrylate, and the multifunctional acrylate may include trimethylolpropane diallyl ether, pentaerythritol triallyl ether, trimethylolpropane di(meth)acrylate, triethylolpropane di(meth)acrylate, glycerol di(meth)acrylate, pentaerythritol tri(meth)acrylate and dipentaerythritol hydroxypentaacrylate.

According to the present invention, the (meth)acrylate oligomer is present at a content of 80 to 90% by weight. When the content of the (meth)acrylate oligomer is less than 80% by weight, the hardness of the resin composition may be degraded, whereas the adhesivity to films may be degraded when the content of the (meth)acrylate oligomer exceeds 90% by weight.

The resin composition according to the present invention includes a low-viscosity acrylate monomer containing functional groups lower than a tetrafunctional group.

Since a photocurable resin facilitates polymerization by irradiation with UV rays within a short time, it is difficult to use a large amount of a solvent. However, the very high viscosity adversely affects the processing conditions, and thus it is necessary to adjust the viscosity. In this case, a low viscosity monomer is used to adjust the viscosity. Also, the low viscosity monomer functions to enhance the hardness, facilitate adhesive handling and increase an adhesive strength to an adherend. Here, the low viscosity monomers are divided into monofunctional, bifunctional and multifunctional monomers, depending on an amount of functional groups in one molecule. As the amount of the multifunctional monomer increases, the multifunctional monomer functions as a crosslinking agent. However, when a monomer containing a functional group greater than tetrafunctional group is used, crosslinking is highly increased, thereby increasing a shrinkage rate and causing surface cracks. Generally, an acrylate or methacrylate group is widely used as the functional group.

Exemplary kinds of the low-viscosity acrylate monomer may include a monofunctional monomer such as hydroxyethyl (meth)acrylate, hydroxypropyl (meth)acrylate, hydroxybutyl (meth)acrylate, hydroxypentyl (meth)acrylate, hydroxyhexyl (meth)acrylate, 2-ethylhexyl acrylate, octyldecyl acrylate, stearyl acrylate, behenyl acrylate, β-carboxyethyl acrylate, isobornyl acrylate, tetrahydrofurfuryl acrylate, tetrahydrofurfuryl methacrylate, 4-butylcyclohexyl acrylate, dicyclopentenyl acrylate, dicyclopentenyloxyethyl acrylate, ethoxyethyl acrylate or ethoxylated monoacrylate, a bifunctional monomer such as 1,6-hexanediol di(meth)acrylate, triphenyl glycol diacrylate, butanediol diacrylate, 1,3-butylene glycol dimethacrylate, neopentyl glycol diacrylate, ethylene glycol dimethacrylate, diethylene glycol di(meth)acrylate, tetraethylene glycol di(meth)acrylate, triethylene glycol di(meth)acrylate, polyethylene glycol di(meth)acrylate, dipropylene glycol diacrylate, methoxylated neopentyl glycol diacrylate or ethoxylated neopentyl glycol diacrylate, and a multifunctional monomer such as trimethylolpropane tri(meth)acrylate, pentaerythritol triacrylate, ethoxylated trimethylolpropane triacrylate, propylated trimethylolpropane triacrylate, glyceryl-propylated triacrylate, tri(2-hydroxyethyl)isocyanurate triacrylate, ditrimethylolpropane tetraacrylate, alkoxylated tetraacrylate or pentaerythritol tetraacrylate, which may be used alone or in combinations.

According to the present invention, the low-viseosity acrylate monomer may be included at a content of 3 to 11% by weight. When the low-viscosity acrylate monomer is used at a content of less than 3% by weight, it is impossible to achieve the viscosity adjustment of the resin composition according to the present invention, thereby causing degradation of hardness and adhesivity to an adherend. On the other hand, when the content of the low-viscosity acrylate exceeds 11% by weight, a photocuring rate is very slow, and thus cracks may be generated due to weak elasticity.

Among the photopolymerizable resins, a radical resin is a resin in which a weaker moiety of a chemical bond is cut by light energy to generate a free radical, which causes a chain reaction, and a polymerization reaction takes place due to the free radical. The photopolymerization initiator used herein is an initiator for radical polymerization which functions to generate radicals to facilitate the polymerization or increase a polymerization rate. The resin composition according to the present invention may be cured without using a photoinitiator, but requires a long curing time. Therefore, an optical film serving as an adherend may be deformed, and physical properties such as hardness may be degraded due to a low curing rate. As a result, the photopolymerization initiator may be preferably used.

The photopolymerization initiator used herein may include at least one selected from the group consisting of chloro acetophenone, diethoxy acetophenone, hydroxy acetophenone, 1-phenyl-2-hydroxy-2-methylpropane-1-one, 1-hydroxy cyclohexyl phenyl ketone, α-amino acetophenone, benzoin ether, benzyl dimethyl ketal, benzophenone, thioxanthone, 2-ethyl anthraquinone, 2-hydroxy-1,2-diphenyl ethanone, 2-ethoxy-1,2-diphenyl ethanone, 2,2-dimethoxy-1,2-diphenyl ethanone, 2-isopropyl-1,2-phenyl ethanone, 2-butoxy-1,2-diphenyl ethanone, 2-isobutoxy-1,2-diphenyl ethanone, 2,2-dimethoxy-1,2-diphenyl ethanone, 2,2-dibutoxy 1-phenyl ethanone, dimethoxy hydroxy acetophenone, 1-(4-isopropyl phenyl)-2-hydroxy-2-methylpropanone, 2-methyl-1-[4-(methylthio)phenyl]-2-morpholinopropanone, 2-benzyl-2-dimethyl amino-1-(4-morpholinophenyl)butanone and 3,6-bis[2-methyl]-2-morpholino(propanonyl)-butyl carbazole, which may be used alone or in combinations.

The photopolymerization initiator used herein is used at a content of 3 to 7% by weight. When the content of the photopolymerization initiator is less than 3% by weight, a curing rate of a resin is decreased, and thus the resin composition may not be completely cured. On the other hand, when the content of the photopolymerization initiator exceeds 7% by weight, the close adhesivity to an adherend may be degraded due to extreme curing of the resin composition.

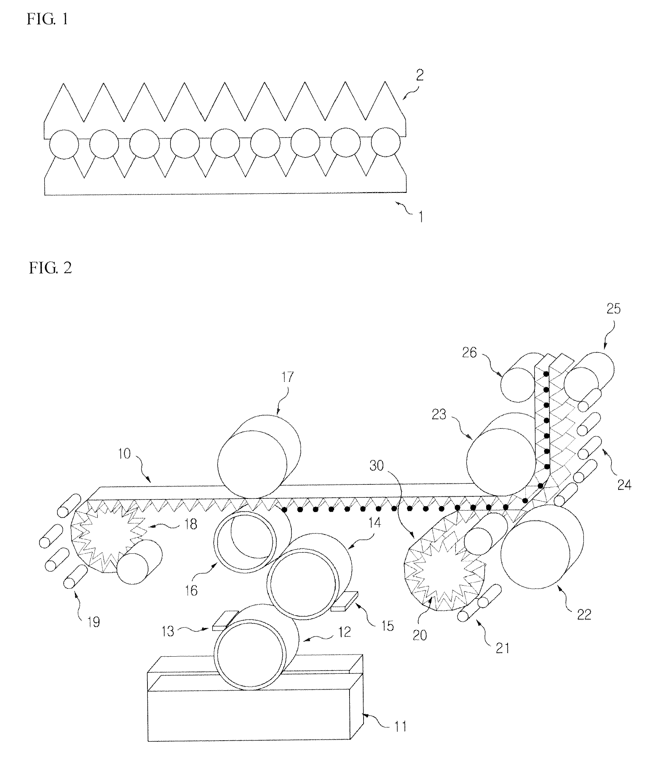

Next, the method according to the present invention may be achieved by applying the UV-curable and thermosetting resin composition having an adhesive property, prepared as described above, to a pattern leading end formed on a surface of a first prism sheet 1 and stacking the pattern leading end on the rear surface of a second prism sheet 2 using pressing and curing processes, as shown in FIG. 1.

FIG. 1 shows one example of stacking a first prism sheet 1 and a second prism sheet 2 on each other. However, a diffusion film may be stacked instead of the second prism sheet 2.

In addition, FIG. 1 shows one example of a prism sheet having a pattern leading end in a triangular sectional shape. However, the sectional shape may be an oval or rectangular shape or a combination thereof.

Hereinafter, the following Example and Experimental Example of the present invention will be described in further detail with reference to the accompanying drawings. Therefore, the description proposed herein is merely a preferable example for the purpose of illustration only, and is not intended to limit the scope of the invention. Therefore, it should be understood that other equivalents and modifications could be made thereto without departing from the scope of the invention, as apparent to those skilled in the art to which the present invention belongs.

### Example

Components of the resin composition listed in the following Table 1 were thoroughly mixed in a homo-mixer to prepare a UV-curable and thermosetting resin composition having an adhesive property.

**Table 1**

| Composition ratio of resin composition | |
|---|---|
| Component | Composition ratio (% by weight) |
| o-phenylphenoxyethyl acrylate | 82 |
| dipentaerythritol hydroxypentaacrylate | 2 |
| phenoxyethyl acrylate | 4 |
| hydroxypropyl methacrylate | 7 |
| α-amino acetophenone | 5 |

| | |
|---|---|
| 1) o-phenylphenoxyethyl acrylate (an acrylate oligomer) 2) Dipentaerythritol hydroxypentaacrylate (an acrylate oligomer) 3) Phenoxyethyl acrylate (an acrylate oligomer) 4) Hydroxypropyl methacrylate (a low-viscosity acrylate monomer) 5) α-amino acetophenone (a photopolymerization initiator) | |

Next, the resin composition prepared thus was applied to a pattern leading end formed on a surface of a prism sheet, and the pattern leading end was then pressed and cured on the rear surface of the diffusion film or the prism sheet to manufacture a composite film according to the present invention.

FIG. 2 shows the manufacture of a composite film according to one exemplary embodiment of the present invention.

A first adhesive roll 12 whose outer circumferential surface is rotatably supported while coming in contact with the resin composition is arranged on a storage container 11 containing the resin composition of Table 1, and a first adjustment plate 13 configured to uniformly adjust a coating thickness of the resin composition applied to an outer circumferential surface of the first adhesive roll 12 in a state in which the first adjustment plate 13 is spaced a certain distance from the outer circumferential surface of the first adhesive roll 12 is arranged at one side of the first adhesive roll 12.

A second adhesive roll 14, which is rotatably supported while coming in contact with the resin composition applied to the outer circumferential surface of the first adhesive roll 12, is arranged at the other side of the first adhesive roll 12, and a second adjustment plate 15 configured to uniformly adjust a coating thickness of the resin composition applied to an outer circumferential surface of the second adhesive roll 14 in a state in which the second adjustment plate 15 is spaced a certain distance from the outer circumferential surface of the second adhesive roll 14 is arranged at one side of the second adhesive roll 14.

A third adhesive roll 16, which is rotatably supported while coming in contact with the resin composition applied to the outer circumferential surface of the second adhesive roll 14, is arranged at the other side of the second adhesive roll 14, and the third adhesive roll 16 comes in contact with the pattern leading end formed on the surface of the prism sheet 10, which moves at a rate of 1 to 30 m/min.

A drum roll 17 is rotatably supported on a surface opposite to the third adhesive roll 16 with respect to the prism sheet 10, and thus comes in contact with the rear surface of the prism sheet 10.

A pattern roller 18 having triangular grooves is rotatably supported upstream of the third adhesive roll 16 and the drum roll 17, with respect a moving direction of the prism sheet 10, and a UV lamp 19 having an energy density of 1,200 mJ/cm² is arranged so that the UV lamp 19 can be spaced a certain distance from the pattern roller.

A pattern roller 20 having triangular grooves is rotatably supported downstream of the third adhesive roll 16 and the drum roll 17, with respect to a moving direction of the prism sheet 10, and a UV lamp 21 having an energy density of 1,200 mJ/cm² is arranged so that the UV lamp 21 can be spaced a certain distance from the pattern roller 20.

A second laminating roll 23 is arranged downstream of the pattern roller 20 and rotatably supported with respect to an opposite surface of the first laminating roll 22 between the first laminating roll 22 and the prism sheets 10 and 30, which come in contact with the pattern leading end formed on a surface of the prism sheet 30 manufactured using the pattern roller 20 and the UV lamp 21, so that second laminating roll 23 can come in contact with the rear surface of the prism sheet 10,

A UV lamp 24 having an energy density of 1,200 mJ/cm² is arranged downstream of the first laminating roll 22 and the second laminating roll 23, and a third laminating roll 25, which comes in contact with the pattern leading end formed on the surface of the prism sheet 30, and a fourth laminating roll 26, which is opposite to the third laminating roll 25 with the prism sheets 10 and 30 interposed, are rotatably supported downstream of the UV lamp 24 so that the fourth laminating roll 26 can come in contact with the rear surface of the prism sheet 10.

The first to fourth laminating rolls 22, 23, 25 and 26 are heated to a suitable temperature to cure the resin composition with heat.

An apparatus for manufacturing a composite film according to present invention as configured above is driven as follows.

The resin composition contained in the storage container 11 as listed in Table 1 comes in contact with an outer circumferential surface of the rotating first adhesive roll 12 to be applied to the outer circumferential surface of the first adhesive roll 12, a coating thickness of the resin composition is adjusted by means of the first adjustment plate 13, and the resin composition applied to the outer circumferential surface of the first adhesive roll 12 is then applied to an outer circumferential surface of the rotating second adhesive roll 14 while the second adhesive roll 14 comes in contact with the resin composition.

A coating thickness of the resin composition applied to the outer circumferential surface of the second adhesive roll 14 is adjusted by means of the second adjustment plate 15, and the resin composition applied to the outer circumferential surface of the second adhesive roll 14 is then applied to an outer circumferential surface of the rotating third adhesive roll 16 while the third adhesive roll 16 comes in contact with the resin composition.

The prism sheet 10 manufactured using the pattern roller 18 and the UV lamp 19 is introduced into the outer circumferential surface of the third adhesive roll 16 to which the resin composition is applied at a moving rate of 1 to 30 m/min.

The pattern leading end formed on the surface of the prism sheet 10 comes in contact with the resin composition applied to the outer circumferential surface of the third adhesive roll 16, and pressed by the drum roll 17, which comes in contact with the rear surface of the prism sheet 10, to attach the resin composition to the pattern leading end.

The pattern leading end attached to the resin composition comes in contact with the rear surface, that is, a pattern-forming surface of another prism sheet 30, which is manufactured using the pattern roller 20 and the UV lamp 21, is pressed by the first laminating roll 22 and the second laminating roll 23, and the resin composition attached to the pattern leading end is thermally cured by the first laminating roll 22 and the second laminating roll 23, which have been heated in advance.

Further, the resin composition is photocured using the UV lamp 24, and pressed and thermally cured once more using the third laminating roll 25 and the fourth laminating roll 26 to couple and stack the two prism sheets 10 and 30, thereby manufacturing a composite film according to the present invention.

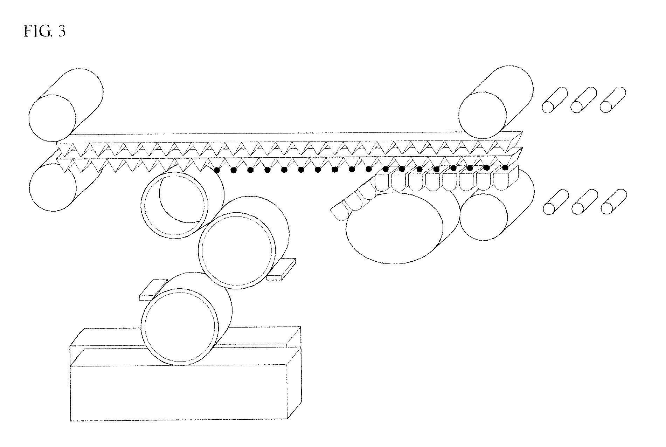

FIG. 3 shows the manufacture of a composite film according to another exemplary embodiment of the present invention.

FIG. 3 shows the composite film manufactured in FIG. 2 on which a diffusion film is further stacked. Here, the manufacturing processes are performed in the same manner as in FIG. 2, and therefore descriptions of the same parts are omitted for clarity.

Generally, the stacked prism sheet has a 3- to 4-layered structure, but a stacking number of the prism sheet may be increased or decreased as necessary.

### Experimental Example

In order to determine optical properties of the composite film manufactured according to the method of Example, the composite film manufactured in Example was measured for brightness, curl and peel strength by varying a thickness of the adhesive resin composition. The results are listed in the following Table 2.

**Table 2**

| Measurement results of optical properties according to a coating thickness of adhesive resin composition | | | | |
|---|---|---|---|---|
| No. | Coating thickness (µm) of adhesive resin composition | Brightness¹⁾ (%) | curl (mm) | Peel strength (gf/25 mm) |
| 1 | 1 | 112 | +2 | 3 |
| 2 | 2 | 112 | +1 | 3.8 |
| 3 | 3 | 110 | 0 | 6.7 |
| 4 | 4 | 105 | 0 | 14 |
| 5 | 5 | 105 | 0 | 22 |
| 6 | 6 | 103 | 0 | 32 |
| 7 | 7 | 98 | 0 | Measurement impossible |
| 8 | 8 | 96 | 0 | Measurement impossible |

| | | | | |
|---|---|---|---|---|
| Note 1): A value of brightness is indicated as a relative value based on a 3M BEF III (Minnesota Mining and Manufacturing Company: 3M, US) film. * Measuring equipment 1) Brightness : CA-S1500W ver.2.1 (KONICA MINOLTA, Japan) 2) Curl: steel ruler 3) Peel strength: COAD.203 push/pull-type adhesive strength tester (OCEAN SCIENCE, Korea) | | | | |

From the measurement results listed in Table 2, it can be seen that when a coating thickness of the adhesive resin composition was in a range of 1 µm to 2 µm, the composite film showed good brightness, but the composite film was curved and had a low peel strength.

Also, when a coating thickness of the adhesive resin composition was in a range of 7 µm to 8 µm, the brightness was degraded and the resin composition was used at a relatively high amount.

Therefore, the desirable coating thickness of the adhesive resin composition was in a range of 3 to 6 µm.

As described above, the method of manufacturing a composite film on which an optical film is stacked according to the present invention may apply to manufacturing one composite film by stacking optical films, each of which constitutes a backlight unit, without causing damage to optical properties. Therefore, it is possible to reduce the consumption of cost and time required to stack the respective optical films and prevent surface defects on the optical films, thereby increasing a production yield.

While the invention has been shown and described with reference to certain exemplary embodiments thereof, it will be understood by those skilled in the art that various changes in form and details may be made therein without departing from the scope of the invention as defined by the appended claims.

## Claims

1. A method of manufacturing a composite film on which an optical film is stacked, comprising:
preparing a resin composition including an acrylate oligomer at 80 to 90% by weight, a low-viscosity acrylate monomer at 3 to 11% by weight and a photopolymerization initiator at 3 to 7% by weight;
applying the resin composition onto a leading end of a pattern formed on a surface of a prism sheet and pressing the leading end on the rear surface of a diffusion film or the prism sheet; and
curing the pressed resin composition with UV rays and heat.

2. The method according to claim 1, wherein the applying and pressing of the resin composition on the pattern leading end comprises:
applying a resin composition contained in a storage container 11 to an outer circumferential surface of first adhesive roll 12, which rotates over the storage container 11, while coming in contact with the first adhesive roll 12, adjusting a coating thickness of the resin composition by means of a first adjustment plate 13 and applying the resin composition to an outer circumferential surface of a rotating second adhesive roll 14 while coming in contact with the resin composition applied to the outer circumferential surface of the first adhesive roll 12;
adjusting a coating thickness of the resin composition applied to the outer circumferential surface of the second adhesive roll 14 by means of a second adjustment plate 15 and applying the resin composition to an outer circumferential surface of a rotating third adhesive roll 16 while coming in contact with the resin composition applied to the outer circumferential surface of the second adhesive roll 14;
introducing a prism sheet 10 manufactured using a pattern roller 18 and a UV lamp 19 into an outer circumferential surface of the third adhesive roll 16 to which the resin composition is applied;
contacting the pattern leading end formed on the surface of the prism sheet 10 with the resin composition on the outer circumferential surface of the third adhesive roll 16 and attaching the resin composition to the pattern leading end by means of a pressing process using a drum roll 17 which comes in contact with the rear surface of the prism sheet 10;
contacting the pattern leading end to which the resin composition is attached with a pattern-forming surface of another prism sheet 30 manufactured using a pattern roller 20 and a UV lamp 21; and
pressing and curing the resin composition attached to the pattern leading end using a first laminating roll 22 and a second laminating roll 23, which are arranged in positions opposite to each other with respect to the prism sheet.

3. The method according to claim 1, wherein the resin composition applied to the pattern leading end has a thickness of 3 to 6 µm.

4. The method according to claim 1, wherein the acrylate oligomer comprises hydroxyethyl (meth)acrylate, hydroxypropyl (meth)acrylate, hydroxybutyl (meth)acrylate, hydroxypentyl (meth)acrylate, hydroxyhexyl (meth)acrylate, phenoxyethyl (meth)acrylate, or o-phenylphenoxyethyl (meth)acrylate, and a multifunctional acrylate is at least one selected from the group consisting of trimethylolpropane diallyl ether, pentaerythritol triallyl ether, trimethylolpropane di(meth)acrylate, triethylolpropane di(meth)acrylate, glycerol di(meth)acrylate, pentaerythritol tri(meth)acrylate and dipentaerythritol hydroxypentaacrylate.

5. The method according to claim 1, wherein the low-viscosity acrylate monomer is at least one selected from the group consisting of hydroxyethyl (meth)acrylate, hydroxypropyl (meth)acrylate, hydroxybutyl (meth)acrylate, hydroxypentyl (meth)acrylate, hydroxyhexyl (meth)acrylate, 2-ethylhexyl acrylate, octyldecyl acrylate, stearyl acrylate, behenyl acrylate, β-carboxyethyl acrylate, isobornyl acrylate, tetrahydrofurfuryl acrylate, tetrahydrofurfuryl methacrylate, 4-butylcyclohexyl acrylate, dicyclopentenyl acrylate, dicyclopentenyloxyethy acrylate, ethoxyethyl acrylate, ethoxylated monoacrylate, 1,6-hexanediol di(meth)acrylate, triphenyl glycol diacrylate, butanediol diacrylate, 1,3-butylene glycol dimethacrylate, neopentyl glycol diacrylate, ethylene glycol dimethacrylate, diethylene glycol di(meth)acrylate, tetraethylene glycol di(meth)acrylate, triethylene glycol di(meth)acrylate, polyethylene glycol di(meth)acrylate, dipropylene glycol diacrylate, methoxylated neopentyl glycol diacrylate, ethoxylated neopentyl glycol diacrylate, trimethylolpropane tri(meth)acrylate, pentaerythritol triacrylate, ethoxylated trimethylolpropane triacrylate, propylated trimethylolpropane triacrylate, glyceryl propylated triacrylate, tri(2-hydroxyethyl)isocyanurate triacrylate, ditrimethylolpropane tetraacrylate, alkoxylated tetraacrylate and pentaerythritol tetraacrylate.

6. The method according to claim 1, wherein the photopolymerization initiator is at least one selected from the group consisting of chloro acetophenone, diethoxy acetophenone, hydroxy acetophenone, 1-phenyl-2-hydroxy-2-methylpropane-1-one, 1-hydroxy cyclohexyl phenyl ketone, α-amino acetophenone, benzoin ether, benzyl didimethyl ketal, benzophenone, thioxanthone, 2-ethyl anthraquinone, 2-hydroxy-1,2-diphenyl ethanone, 2-ethoxy-1,2-diphenyl ethanone, 2,2-dimethoxy-1,2-diphenyl ethanone, 2-isopropyl-1,2-phenyl ethanone, 2-butoxy-1,2-diphenyl ethanone, 2-isobutoxy-1,2-diphenyl ethanone, 2,2-dimethoxy-1,2-diphenyl ethanone, 2,2-dibutoxy 1-phenyl ethanone, dimethoxy hydroxy acetophenone, 1-(4-isopropyl phenyl)-2-hydroxy-2-methylpropanone, 2-methyl-1-[4-(methylthio)phenyl]-2-morpholinopropanone, 2-benzyl-2-dimethyl amino-1-(4-morpholinophenyl)butanone and 3,6-bis[2-methyl]-2-morpholino(propanonyl)-butyl carbazole.
